# EUROPÄISCHE PATENTSCHRIFT

(11) **EP 1 477 790 B1**
(45) Veröffentlichungstag und Bekanntmachung des Hinweises auf die Patenterteilung: **02.11.2005**
(21) Anmeldenummer: 03101350.1
(22) Anmeldetag: 14.05.2003
(51) Int. Cl.: G01M 13/02

(54) **Verfahren und Prüfstand für Schwingungs-, Akustik- und/oder Funktionsuntersuchungen von Getrieben**
Method and test bench for investigating vibrations, for acoustic investigations and/or functional examinations of transmission gears
Procédé et banc d'essai pour l'examen des vibrations, pour l'examen acoustique et/ou pour l'examen fonctionelle de boîtes de vitesses

(43) Veröffentlichungstag der Anmeldung: 17.11.2004
(73) Patentinhaber: Getrag Ford Transmissions GmbH, 50725 Köln (DE)
(72) Erfinder: Fan, Jun, 50259 Pulheim (DE)
(74) Vertreter: Drömer, Hans-Carsten

(56) Entgegenhaltungen:
- DE-A- 4 328 537
- DE-A- 19 826 526
- DE-C- 518 352
- US-A- 4 584 882

## Beschreibung

Die Erfindung bezieht sich auf ein Verfahren zur Schwingungs-, Akustik- und/oder Funktionsuntersuchung von Getrieben und einen Prüfstand in Kombination mit einem zu prüfen den Getriebe zur Durchführung der Untersuchungen umfassend einen Rahmen zum Einspannen des Getriebes und einen Antriebsmechanismus.

Geräuscheentwicklung in einem Antriebsstrang eines Fahrzeugs, insbesondere in einem Getriebe, beeinträchtigen den Innengeräuschkomfort des Fahrzeugs. Dabei spielen neben Schalt- und Lagergeräuschen Geräusche aufgrund von Losteilschwingungen eine wichtige Rolle, wobei Geräusche aufgrund von Losteilschwingungen im Leerlauf als Klappern und im Zug- und Schubbetrieb als Rasseln bezeichnet werden. Losteile von Getrieben sind in erster Linie Räder, welche sich in einem gewählten Gang des Schaltgetriebes nicht im Kraftfluß befinden und lose mitdrehen. Wichtigste Erregerquelle für die Losteilschwingung ist eine Schwingungsanregung an einer Antriebswelle des Getriebes, beispielsweise aufgrund der Drehungleichförmigkeit eines antreibenden Verbrennungsmotors.

Es ist bekannt, auf geeigneten Prüfständen Schwingungs-, Akustik- und/oder Funktionsuntersuchungen durchzuführen, um anhand der Untersuchungsergebnisse das Geräuschverhalten zu verbessern. (Herrmann, J; Timmers, J.: Geräuschuntersuchungen als Hilfsmittel der Fertigungskontrolle. In: Industrie-Anzeiger, 87. Jahrgang, Nr. 17, 26.02.1965, S309-314)

Für Untersuchungen an einem Prüfstand wird im allgemeinen der in Fahrzeugbetrieb eingesetzte Motor, beispielsweise der Verbrennungsmotor, durch einen geeigneten Antriebsmechanismus ersetzt. Dabei ist es aus der zitierten Literatur bekannt, eine Drehanregung an der Antriebswelle des Getriebes auf einem Prüfstand beispielsweise über einen Exzentermechanismus aufzubringen. Durch einen Exzentermechanismus ist eine annähernd sinusförmige Anregung erzeugbar, wobei die Amplituden der Anregung durch die Einstellung der Exzentrität variierbar wobei die Amplituden der Anregung durch die Einstellung der Exzentrität variierbar sind. Nachteilig ist jedoch, daß durch einen derartigen Antrieb die reale Anregung durch einen Verbrennungsmotor nur bedingt nachgebildet werden kann, und eine Abbremsung an der Abtriebsseite immer notwendig ist.

Daneben ist es beispielsweise aus der DE 43 28 537 A1 bekannt, die Antriebswelle des Getriebes durch einen hochdynamischen Servomotor anzutreiben, wobei der Servomotor mit beliebigen Drehzahlverläufen angesteuert werden kann. Dadurch lassen sich theoretisch beliebige Anregungen durch einen Verbrennungsmotor exakt nachbilden. Die Nachbildung der Anregung ist jedoch im Regelfall aufgrund der Leistungsgrenzen bekannter Servomotoren begrenzt. Derartige Prüfstände sind sehr aufwendig und damit kostenintensiv.

Aus der DE 198 26 526 ist eine Anordnung zur Funktionsprüfung von Antriebsstrangkomponenten durch einen rotierenden Antrieb bekannt, dessen Welle mit der Welle der jeweiligen Antriebstrangkomponente verbindbar ist. Die Verbindung wird mittels einer Kupplung vorgenommen, die impulsbetriebene Piezoelemente aufweist, wodurch auf die rotierenden Wellen eine überlagerte Drehschwingung mit einem beliebigen Erregerspektrum aufgebracht werden kann. Aufgrund der rotierenden Wellen ist ein hoher Aufwand an Meßvorrichtungen und Zeit für die Messungen der Antriebsstrangkomponenten erforderlich.

Der Erfindung liegt daher das technische Problem zugrunde, ein einfaches und kostengünstiges Verfahren und einen Prüfstand zur Untersuchung von Getrieben zu schaffen, durch welche mindestens ein Klappern oder Rasseln untersucht werden kann.

Die Lösung des Problems ergibt sich durch die Gegenstände mit den Merkmalen der Patentansprüche 1 und 3. Weitere vorteilhafte Ausgestaltungen der Erfindung ergeben sich aus den abhängigen Ansprüchen.

Eine erste Lösung umfaßt ein erfindungsgemäßes Verfahren, bei dem eine Antriebswelle eines zu prüfenden Getriebes zu einer Drehschwingung um eine Neutralstellung angeregt wird. Räder, welche sich in einem eingelegten Getriebegang nicht im Kraftfluß befinden, drehen bei Schaltgetrieben lose mit. Diese sogenannten Losräder und/oder andere Losteile eines Getriebes können im Rahmen ihre Zahn- und/oder Lagerspiele zu einer Schwingung angeregt werden, sie klappern und/oder rasseln. Haupterregerquelle ist eine Drehungleichförmigkeit einer an der Antriebeswelle des Getriebes aufgebrachten Drehzahl. Um die Effekte der Drehungleichförmigkeit nachzubilden ist es ausreichend, eine Drehschwingung um eine Neutralstellung an der Antriebswelle aufzubringen. Unwuchten und andere Fertigungs- und/oder Montageungenauigkeiten können aufgrund einer Rotation der Antriebswelle als innerer Erregerquelle wirken. Diese Effekte spielen jedoch nur eine untergeordnete Rolle im Vergleich zur äußeren Anregung an der Antriebswelle. Durch Variation der Neutralstellung lassen sich aber auch Einflüsse von Fertigungs- und/oder Montageungenauigkeiten untersuchen.

In einer bevorzugten Ausführungsform wird mindestens eine reale Anregung durch den Verbrennungsmotor erfaßt und daraus mindestens eine Frequenz und/oder eine Amplitude der Drehschwingungsanregung ermittelt. Reale Anregungen an der Antriebswelle, welche im Betrieb des Fahrzeugs durch den Verbrennungsmotor aufgebracht werden, sind durch bekannte Verfahren, beispielsweise unter Verwendung von Drehgebem und/oder an bekannten Antriebsprüfständen, ermittelbar. Aus den Meßdaten werden die Schwingungsamplituden und/oder die Frequenzen vorzugsweise mittels Fourier-Analyse ermittelt und für die Anregung am Prüfstand aufbereitet. Der Einfluß der Drehzahl auf die Anregung ist dabei indirekt zu berücksichtigen, indem vorzugsweise unterschiedliche Drehschwingungsanregungen in Abhängigkeit verschiedener Drehzahlen ermittelt werden. Anstelle der Anregung mit einer in Abhängigkeit der realen Anregung ermittelten Amplitude und/oder Frequenz sind auch Untersuchungen mit Drehschwingungsanregungen denkbar, welche anhand kritischer Drehzahlen und/oder kritischer Motorordnungen ermittelt werden.

Ein erfindungsgemäßer Prüfstand zur Durchführung von Schwingungs-, Akustik- und/oder Funktionsuntersuchungen von Getrieben ist mit einem Antriebsmechanismus ausgebildet, wobei der Antriebsmechanismus mindestens einen Aktuator umfaßt, durch welchen eine Drehschwingung an der Antriebswelle eines zu prüfenden Getriebes um eine Neutralstellung aufbringbar ist. Die Antriebswelle des Getriebes wird erfindungsgemäß durch den Antriebsmechanismus nicht zu einer Rotation angeregt. Dadurch vereinfachen sich die Anforderungen, welche beispielsweise an einen Rahmen zur Einspannung des Getriebes und/oder an den Aktuator gestellt werden.

Vorzugsweise umfaßt der Antriebsmechanismus mindestens eine Verbindungsstange, wobei die Verbindungsstange an einem Ende orthogonal zur Antriebswelle drehfest mit dieser verbindbar ist und am anderen Ende translatorisch durch den Aktuator verschiebbar ist. Dadurch ist eine einfache Ausbildung des Aktuators als Linearantrieb möglich. Die Länge der Verbindungsstange beeinflußt dabei die Anforderungen an den Hub des Aktuators. Soll beispielsweise eine Drehschwingung mit einer Amplitude von 3000 rad/s^2 bei Frequenzen zwischen 20 und 100 Hz aufgebracht werden, so ist eine Auslenkung zwischen 0,5 und 11° um die Neutralstellung erforderlich. Bei einer Länge der Verbindungsstange von beispielsweise 0,5 m ergibt sich damit ein erforderlicher Hub von 3,8 bis 95 mm.

Der Aktuator kann als elektromagnetischer Schwingungserreger, als hydraulischer und/oder als elektrischer Antrieb ausgebildet sein. Daneben sind auch andere geeignete Ausbildungen, beispielsweise pneumatisch, magnetisch und/oder mit einem Servomotor denkbar.

In einer weiteren Ausführungsform die Getriebeausgangswelle fest mit einem Rahmen und/oder einer Umgebung verbindbar. Im Regelfall wird an den Prüfständen Klappern und/oder Rasseln untersucht und die Ergebnisse auf den Lastbetrieb übertragen. Soll der Lastbetrieb ebenfalls direkt untersucht werden, so ist es bekannt, das zu untersuchende Getriebe an der Getriebeausgangsseite durch einen zusätzlichen Bremsmotor zu belasten. Derartige Prüfstände sind jedoch äußerst aufwendig und kostspielig in der Herstellung. Da erfindungsgemäß keine Rotationsanregung aufgebracht wird, ist es ausreichend, die Getriebeausgangswelle zu fixieren und gegebenenfalls vorzuspannen, um dadurch einen Schub- und/oder Zugbetrieb auf dem Prüfstand abzubilden. Die Verbindung der Getriebeausgangswelle kann dabei unter variabler Vorspannung erfolgen, um verschiedene Belastungsfälle abzubilden.

In einer weiteren Ausführungsform ist die Getriebeausgangswelle mit einer Fahrzeug-Antriebswelle koppelbar, wobei die Fahrzeug-Antriebswelle fest mit dem Rahmen und/oder der Umgebung verbindbar ist. Dadurch ist die Kopplung des Getriebes mit der Fahrzeug-Antriebswelle ebenfalls in den Untersuchungen berücksichtigbar. Eine Untersuchung des Schwingungs- und/oder Geräuschverhaltens eines Getriebes kann auch in Kombination mit weiteren Komponenten des Antriebsstrangs erfolgen, beispielsweise einer Kardanwelle und/oder einer Achse.

In einer weiteren Ausführungsform ist die Vorrichtung mit mindestens einer Platte ausgebildet, wobei das Getriebe mit seinem Gehäuse an der Platte befestigbar ist. Sollen weitere Komponenten des Antriebsstrangs auf dem Prüfstand untersucht werden, so ist der Prüfstand mit entsprechenden Lagerungen auszubilden.

In einer weiteren Ausführungsform umfaßt die Vorrichtung mindestens eine Geräusch-Meßeinrichtung, umfassend mindestens ein Mikrophon und/oder mindestens einen Vibrationsaufnehmer. Die Geräusche des Getriebes sind im Nahfeld durch das Mikrophon aufnehmbar. Schwingungen des Getriebegehäuses sind durch den Vibrationsaufnehmer erfaßbar. Die durch den Vibrationsaufnehmer und/oder das Mikrophon erfaßten Signale können durch die Meßeinrichtung bewertet werden. Dadurch ist eine exaktere und objektivere Bewertung möglich, als beispielsweise durch menschliche Hörproben.

Die Erfindung wird nachfolgend anhand eines bevorzugten Ausführungsbeispiels näher erläutert. Die Figuren zeigen:
- Fig. 1: eine schematische Darstellung eines Prüfstands mit zu prüfendem Getriebe; und
- Fig. 2:: eine schematische Darstellung eines Antriebsmechanismus.

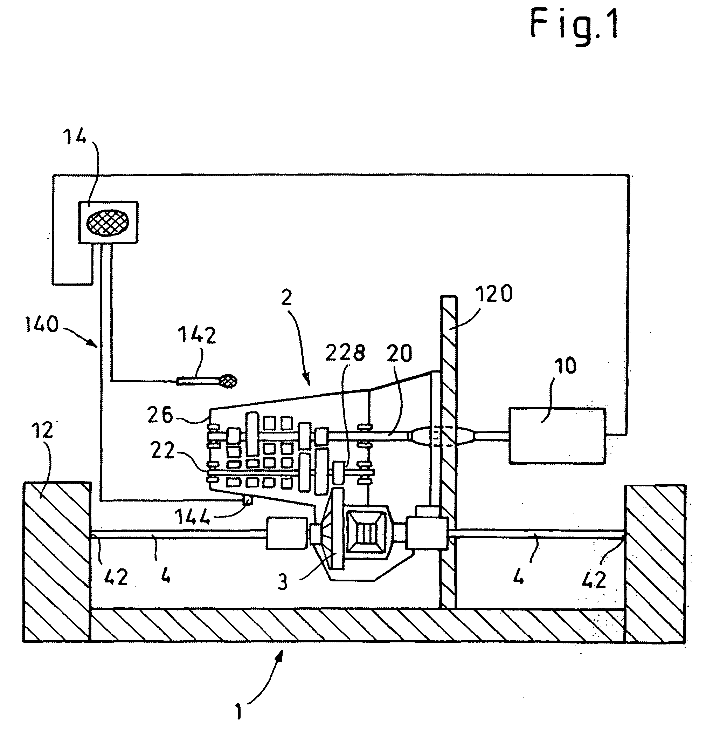

Fig. 1 zeigt schematisch einen Prüfstand 1 zur Schwingungs-, Akustik- und/oder Funktionsuntersuchung von Getrieben 2. Der Prüfstand 1 umfaßt einen Antriebsmechanismus 10, einen schraffiert dargestellten Rahmen 12 und eine Recheneinheit 14. Das Zweiwellen-Getriebe 2 ist in einem Gehäuse 26 angeordnet und mit dem Gehäuse 26 an einer Platte 120 (erster Rahmen) des Rahmens 12 befestigt. Ein Achsgetriebe 3 im Gehäuse 26 des Getriebes 2 angeordnet ist und wird durch das Rad 228 angetrieben. Das Achsgetriebe 3 treibt eine Antriebswelle 4 an. Die Enden 42 der Antriebswelle 4 sind fest mit dem Rahmen 12 (zweiter Rahmen) des Prüfstands 1 verbunden. Die Geräusche sind durch eine Geräusch-Meßeinrichtung 140 umfassend ein Mikrophon 142 und einen Vibrationsaufnehmer 144 erfaßbar. Die Geräusch-Meßeinrichtung 140 ist dabei als Teil der Recheneinheit 14 ausgebildet. Die Recheneinheit 14 dient außerdem zur Ansteuerung des Antriebsmechanismus 10. Durch die gemeinsame Recheneinheit 14 ist eine kompakte Anordnung und eine schnelle Auswertung möglich. Es ist jedoch auch denkbar, die Ansteuerung des Antriebsmechanismus 10 unabhängig von der Geräusch-Meßeinrichtung auszubilden.

An einer Antriebswelle 20 des Getriebes 2 ist durch den Antriebsmechanismus 10 eine Schwingungsanregung um eine Neutralstellung aufbringbar. Dabei kann es sich entweder um eine kinematische Anregung und/oder um eine Kraftanregung beispielsweise einen Momentenverlauf handeln.

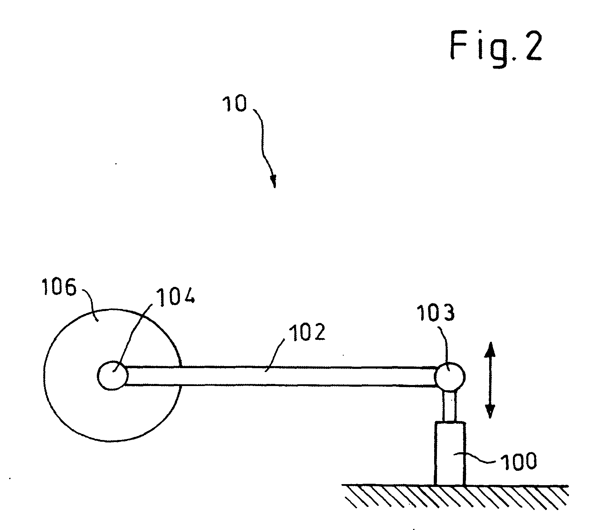

Fig. 2 zeigt eine bevorzugte Ausführungsform des Antriebsmechanismus 10 mit einem hydraulischen Aktuator 100 und einem Verbindungsstab 102. Durch den Aktuator 100 wird das mit dem Aktuator verbundene Ende 103 des Verbindungsstabs 102 zu einer translatorischen Schwingung anregt. Die Frequenz und die Amplitude der Schwingungsanregung sind dabei beispielsweise durch die in Fig. 1 dargestellte Recheneinheit 14 vorgegeben. Das zweite Ende 104 des Verbindungsstabs 102 ist drehfest mit der Antriebswelle 20 des in Fig. 2 nicht dargestellten Getriebes 2 verbunden. Die Verbindung des Antriebsmechanismus 10 an die Antriebswelle 20 ist beispielsweise über eine drehsteife Kupplung 106 herstellbar. Die Antriebswelle 20 wird so durch den Aktuator 100 zu einer Drehschwingung um eine Neutralstellung angeregt. Die Frequenz der Drehschwingungsanregung entspricht dabei der Frequenz der translatorischen Verschiebung des Aktuators 100. Die Amplitude der Drehschwingungsanregung ist abhängig von der Amplitude der translatorischen Bewegung und der Länge des Verbindungsstabs 102.

Auf dem Prüfstand sollen die realen Betriebsbedingungen möglichst exakt abgebildet werden. Im realen Betrieb wird das Getriebe 2 im Regelfall durch einen Verbrennungsmotor angetrieben. Die Amplitude und die Frequenz der Drehschwingungsanregung werden daher vorzugsweise aus dem Drehzahlverlauf des Verbrennungsmotors ermittelt.

Das in Fig. 1 dargestellte Getriebe 2 ist als deaxiales Zweiwellen-Getriebe mit einer Antriebswelle 20 und einer Abtriebswelle 22 ausgebildet. Bei Zweiwellen-Getrieben befinden sich Radpaare der Antriebswelle 20 und der Abtriebswelle 22 ständig im Eingriff miteinander. Dabei ist mindestens ein Rad als Festrad mit der Antriebs- oder Abtriebswelle festverbunden. Soll keine Bewegung und/oder Kraft über das Radpaar übertragen werden, so dreht das zweite Rad des Radpaars lose mit.

Im Leerlauf erfolgt keine Übertragung der Bewegung von der Antriebswelle 20 auf die Abtriebswelle 22 des Getriebes 2. Alle Räder der Abtriebswelle 20 drehen lose mit, d.h. die Losräder sind mit der Abtriebswelle 22 synchronisiert. Das Getriebe ist zwischen Leerlauf, Rückwärtsgang und mehreren Vorwärtsgängen schaltbar. Bei dem in Fig. 1 dargestellten Getriebe 2 handelt es sich beispielsweise um ein 5-Gang-Getriebe mit fünf Vorwärtsgängen. Durch Einlegen eines Gangs läuft der Kraftfluß über das entsprechende Radpaar der Antriebswelle 20 und der Abtriebswelle 22. Zum Schalten werden nicht dargestellte Schaltelemente des Getriebes, wie Schaltmuffen, Synchronringen und andere, derart bewegt, daß das zu einem eingelegten Gang gehörige Radpaar formschlüssige Verbindungen mit der Antriebs- und Abtriebswelle eingeht. Dabei werden die übrigen Räder der Antriebswelle von dieser getrennt und laufen lose mit, d.h. die Losräder sind mit der Antriebswelle 20 synchronisiert.

Aufgrund von Unregelmäßigkeiten in der Anregung können die lose mitdrehenden Räder innerhalb ihrer Zahn- und/oder Lagerspiele zu Schwingungen angeregt werden: sie klappern oder rasseln.

Durch ein Umschalten zwischen Leerlauf und den Gängen des Getriebes 2 kann wahlweise Klappern oder Rasseln untersucht werden.

Die Antriebswelle 20 ist nicht drehfest gelagert und durch Einlegen der Leerlaufstellung ist ein Klappern des Getriebes untersuchbar. Durch Einlegen eines beliebigen Getriebegangs wird von der Antriebswelle 20 eine Bewegung auf die Abtriebswelle 22 und damit auf die Antriebswelle 4 übertragen. Die Antriebswelle 4 ist an ihren Enden 42 fest eingespannt. Die Einspannung wirkt der Anregung durch den Antriebsmechanismus 10 entgegen. Dadurch ist ein Schub- bzw. Zugbetrieb des Getriebes 2 am Prüfstand simulierbar. Durch Wahl eines Vorspannungsmomentes an der Einspannung der Antriebswelle 4 lassen sich verschiedene Lastarten untersuchen.

Daneben ist ein erfindungsgemäßer Prüfstand auch für andere Getriebearten denkbar, beispielsweise ein koaxiales Zweiwellen-Getriebe und/oder ein Mehrgruppengetriebe. Bei einem koaxialen Zweiwellengetriebe erfolgt der Abtrieb in der Regel über eine Kardanwelle, wobei die Kardanwelle im Normalbetrieb mit der Motordrehzahl dreht. Es ist daher denkbar, auf dem Getriebeprüfstand die Abtriebswelle des Getriebes und/oder die Kardanwelle drehfest zu fixieren. Die Anzahl der Losräder hängt bei einem koaxialen Zweiwellen-Getriebe von der Schaltstufe ab, so daß vorzugsweise durch Umschalten am Getriebe unterschiedliche Schaltstufen untersucht werden.

## Patentansprüche

1. Verfahren zur Schwingungs-, Akustik- und/oder Funktionsuntersuchung von Getrieben, bei dem mindestens eine Antriebswelle (20) eines Getriebes (2) zu einer Drehschwingung angeregt wird, wobei die Antriebswelle (20) des Getriebes (2) nur in einem kleinen Winkelbereich zu einer Drehschwingung um eine Neutralstellung anregt wird und eine Abtriebswelle (22) des Getriebes (2) selbst oder über eine mit ihr verbundene weitere Welle (4) drehfest fixiert ist.

2. Verfahren nach Anspruch 1, wobei mindestens eine reale Anregung des Getriebes (2) durch einen Verbrennungsmotor erfaßt wird und mindestens eine Frequenz und/oder eine Amplitude der Drehschwingung in Abhängigkeit der realen Anregung ermittelt wird.

3. Prüfstand in Kombination mit einem zu prüfenden Getriebe (2) zur Schwingungs-, Akustik- und/oder Funktionsuntersuchung des Getriebes (2), umfassend mindestens einen Rahmen (12) zum Einspannen des Getriebes (2) und einen Antriebsmechanismus (10), wobei der Antriebsmechanismus (10) mindestens einen Aktuator (100) umfaßt, durch welchen eine Drehschwingung an einer Antriebswelle (20) des Getriebes (2) um eine Neutralstellung aufbringbar ist, und wobei das Getriebe (2) eine Abtriebswelle (22) aufweist, die selbst oder über eine mit ihr verbundene weitere Welle (4) drehfest fixiert ist.

4. Prüfstand nach Anspruch 3, wobei der Antriebsmechanismus eine Verbindungsstange (102) umfaßt, wobei die Verbindungsstange (102) an einem Ende (103) orthogonal zur Antriebswelle (20) drehfest mit dieser verbindbar ist und am anderen Ende (104) mit dem Aktuator (100) drehbeweglich gekoppelt und translatorisch durch den Aktuator verschiebbar ist.

5. Prüfstand nach Anspruch 3 oder 4, wobei der Aktuator (100) als fluidischer und/der elektrischer Linearantrieb ausgebildet.

6. Prüfstand nach einem der Ansprüche 3 bis 5, wobei die Abtriebswelle (22) des Getriebes (2) fest mit einem ersten Rahmen (12) und/oder einem zweiten Rahmen verbindbar ist.

7. Prüfstand nach einem der Ansprüche 3 bis 5, wobei die Abtriebswelle (22) des Getriebes (2) mit einem Achsgetriebe (3) koppelbar ist, und wobei eine Fahrzeug-Antriebswelle (4) durch das Achsgetriebe (3) antreibbar ist und fest mit mindestens einem der Rahmen (12) verbunden ist.

8. Prüfstand nach einem der Ansprüche 3 bis 7, wobei der Rahmen (12) mit mindestens einer Platte (120) ausgebildet ist und wobei das Getriebe (2) mit seinem Gehäuse (26) an der Platte (120) befestigt ist.

9. Prüfstand nach einem der Ansprüche 3 bis 7, wobei der Prüfstand (1) mit mindestens einer Geräusch-Meßeinrichtung (140) ausgestattet ist, umfassend mindestens ein Mikrophon (142) und/oder mindestens einen Vibrationsaufnehmer (144).

## Claims

1. Method for the investigation of vibrations, acoustics and/or functions of transmissions, in which at least one drive shaft (20) of a transmission (2) is excited into torsional vibration, the drive shaft (20) of the transmission (2) being excited into a torsional vibration about a neutral position in only a small angular range, and an output shaft (22) of the transmission (2) being secured fixedly in terms of rotation itself or via a further shaft (4) connected to it.

2. Method according to Claim 1, at least one real excitation of the transmission (2) by an internal combustion engine being detected, and at least one frequency and/or one amplitude of the torsional vibration being determined as a function of the real excitation.

3. Test bench, in combination with a transmission (2) to be tested, for the investigation of vibrations, acoustics and/or functions of the transmission (2), comprising at least one frame (12) for tension-mounting the transmission (2), and a drive mechanism (10), the drive mechanism (10) comprising at least one actuator (100), by means of which a torsional vibration about a neutral position can be applied to a drive shaft (20) of the transmission (2), and the transmission (2) having an output shaft (22) which is secured fixedly in terms of rotation itself or via a further shaft (4) connected to it.

4. Test bench according to Claim 3, the drive mechanism comprising a connecting rod (102), the connecting rod (102) being connectable at one end (103) fixedly in terms of rotation to the drive shaft (20) orthogonally to the latter and being coupled at the other end (104) movably in terms of rotation to the actuator (100) and being displaceable in translation by means of the actuator.

5. Test bench according to Claim 3 or 4, the actuator (100) being designed as a fluidic and/or electric linear drive.

6. Test bench according to one of Claims 3 to 5, the output shaft (22) of the transmission (2) being connectable fixedly to a first frame (12) and/or a second frame.

7. Test bench according to one of Claims 3 to 5, the output shaft (22) of the transmission (2) being coupleable to an axle transmission (3), and a vehicle drive shaft (4) being drivable by means of the axle transmission (3) and being connected fixedly to at least one of the frames (12).

8. Test bench according to one of Claims 3 to 7, the frame (12) being designed with at least one plate (120), and the transmission (2) being fastened with its case (26) to the plate (120).

9. Test bench according to one of Claims 3 to 7, the test bench (1) being equipped with at least one noise-measuring device (140) comprising at least one microphone (142) and/or at least one vibration recorder (144).

## Revendications

1. Procédé pour l'examen des vibrations, pour l'examen acoustique et/ou pour l'examen fonctionnel de boîtes de vitesses, dans lequel au moins un arbre d'entraînement (20) d'une boîte de vitesses (2) est amené en oscillation rotative, l'arbre d'entraînement (20) de la boîte de vitesses (2) n'étant amené en oscillation rotative autour d'une position neutre seulement dans une petite plage angulaire, et un arbre de sortie (22) de la boîte de vitesses (2) étant fixé fixe en rotation lui-même ou par l'intermédiaire d'un arbre (4) supplémentaire qui lui est connecté.

2. Procédé selon la revendication 1, dans lequel au moins une excitation réelle de la boîte de vitesses (2) par un moteur à combustion interne est détectée et au moins une fréquence et/ou une amplitude de l'oscillation rotative est détectée en fonction de l'excitation réelle.

3. Banc d'essai associé à une boîte de vitesses (2) à examiner, pour l'examen des vibrations, pour l'examen acoustique et/ou pour l'examen fonctionnel de la boîte de vitesses (2), comprenant au moins un cadre (12) pour serrer la boîte de vitesses (2) et un mécanisme d'entraînement (10), le mécanisme d'entraînement (10) comprenant au moins un actionneur (100) permettant d'amener une oscillation rotative sur un arbre d'entraînement (20) de la boîte de vitesses (2) autour d'une position neutre, et la boîte de vitesses (2) présentant un arbre de sortie (22) qui est fixé fixe en rotation lui-même ou par l'intermédiaire d'un arbre (4) supplémentaire qui lui est connecté.

4. Banc d'essai selon la revendication 3, dans lequel le mécanisme d'entraînement comprend une tige de connexion (102), la tige de connexion (102) pouvant être connectée fixe en rotation à une extrémité (103) perpendiculaire à l'arbre d'entraînement (20) à ce dernier, et étant accouplée de manière mobile en rotation à l'autre extrémité (104) à l'actionneur (100) et pouvant être déplacée en translation par l'actionneur.

5. Banc d'essai selon la revendication 3 ou 4, dans lequel l'actionneur (100) est réalisé sous forme de commande linéaire fluidique et/ou électrique.

6. Banc d'essai selon l'une quelconque des revendications 3 à 5, dans lequel l'arbre de sortie (22) de la boîte de vitesses (2) peut être connecté fixement à un premier cadre (12) et/ou à un deuxième cadre.

7. Banc d'essai selon l'une quelconque des revendications 3 à 5, dans lequel l'arbre de sortie (22) de la boîte de vitesses (2) peut être accouplé à une boîte de vitesses axiale (3), un arbre d'entraînement du véhicule (4) pouvant être entraîné par la boîte de vitesses axiale (3) et étant connecté fixement à l'au moins un des cadres (12).

8. Banc d'essai selon l'une quelconque des revendications 3 à 7, dans lequel le cadre (12) est réalisé avec au moins une plaque (120), et dans lequel la boîte de vitesses (2) est fixée à la plaque (120) avec son carter (26).

9. Banc d'essai selon l'une quelconque des revendications 3 à 7, dans lequel le banc d'essai (1) est muni d'au moins un dispositif de mesure du bruit (140), comprenant au moins un microphone (142) et/ou au moins un enregistreur de vibrations (144).
